**Europäisches Patentamt**

**European Patent Office**

**Office européen des brevets**

(11) Publication number: **0 042 248**
**B1**

(12) **EUROPEAN PATENT SPECIFICATION**

(45) Date of publication of patent specification: **30.10.85**

(21) Application number: **81302568.1**

(22) Date of filing: **10.06.81**

(51) Int. Cl.⁴: **B 29 C 63/24,** F 16 C 3/02

(54) **Manufacture of composite shafts.**

(30) Priority: **17.06.80 GB 8019796**

(43) Date of publication of application:
**23.12.81 Bulletin 81/51**

(45) Publication of the grant of the patent:
**30.10.85 Bulletin 85/44**

(84) Designated Contracting States:
**AT BE CH LI LU NL SE**

(56) References cited:
**DE-A-2 808 903**
**FR-A-1 456 975**
**FR-A-2 028 312**
**NL-A-6 411 933**
**US-A-3 934 821**

(73) Proprietor: **GKN Group Services Limited**
**Group Head Office P.O. Box 55**
**Smethwick Warley West Midlands B66 2RZ (GB)**

(72) Inventor: **Martin, Simon Charles**
**24 Causeway Frampton Cotterell**
**Bristol B517 2TD (GB)**

(74) Representative: **Robertson, Bernard Collett et al**
**Guest Keen and Nettlefolds plc Group Patents**
**and Licensing Department P.O. Box 55**
**Ipsley House Ipsley Church Lane**
**Redditch Worcestershire B98 0TL (GB)**

Courier Press, Leamington Spa, England.

## Description

The invention relates to an apparatus for the manufacture of shafts of composite, fibre reinforced resin, material.

One typical example of a composite shaft is a propeller shaft for an automotive vehicle. Such a shaft has to transmit torque in both directions and also requires a high degree of bending stiffness to prevent whirling of the shaft. To meet these requirements, it is established that the shaft should have helically wound layers of fibres of opposite pitches, for torsional strength, and a layer of axial fibres intended primarily to provide bending stiffness. The fibres so far described may be, or include a quantity of, carbon fibres, due to the high strength required. It is normal for the axial fibres to be applied outside the helically wound layers of fibres and for an outer circumferential layer of fibre to be provided to hold the axial fibres in position. As this outer layer of fibres does not carry high loads when the shaft is in use but primarily binds other layers together, it can be made from glass fibres. The fibres used in this type of structure are normally not monofilaments but are each made up of a bundle of monofilaments grouped together to form a strand and reference in this specification to fibres is intended to include reference to such strands of fibre.

One way in which the axial fibres and associated resin have been applied to a workpiece constituted by the inner helical layers of a composite shaft has been to apply the fibres to the surface of the workpiece and then coat this assembly with resin.

In NL—A—6411933, there is disclosed a process and apparatus for applying a layer of resin and axial fibres to a workpiece, namely a fibre reinforced resin pipe. Axial fibres are drawn from feed stations, and guided by guide means to converge towards the workpiece in the form of a cone. The fibres are led, under tension, through grooves into which resin has been introduced under pressure, so that the resin completely saturates the fibres before they are applied to the pipe. Such a process and apparatus, however, presents disadvantages in that to treat a large number of fibres a correspondingly large number of grooves for saturating them with resin is necessary. Each such groove requires a resin feed pipe, and the apparatus then becomes very complex. It is difficult to achieve uniform distribution of resin to the fibres, and the system for resin supply is difficult to clean in its entirety after use.

DE—A1—2808903 discloses the application of a plastics material to the inside surface of a pipe, by use of a rotating element to distribute the plastics material by centrifugal force to the pipe interior. The plastics material is run onto the surface of the rotating element from supply pipes. There is, however, no adaption of such apparatus to enable it to be used to apply resin to fibres, and, indeed, control to achieve even distribution of the plastics material is difficult.

It is the object of the present invention to provide an improved apparatus for applying resin and axial fibres to a workpiece, in which the above mentioned disadvantages are overcome.

According to the present invention there is provided apparatus for applying a layer of resin and axial fibres to a workpiece during the manufacture of a composite shaft, including means for supporting the workpiece along an axis, a plurality of fibre feed stations spaced around the periphery of the axis, guide means for guiding the fibres from the stations such that they converge in a cone towards the workpiece, and resin supply means arranged to apply resin to the fibres of the cone after they have converged sufficiently to support resin on and between the fibres but before the fibres reach the workpiece, characterised in that the resin supply means comprises an annular member co-axial with and rotatable about said axis, an inwardly directed annular channel in the annular member and a resin feed to the interior of the channel whereby the resin is distributed around and overflows from the channel by centrifugal force into the path of the fibres over a surface of the annular member to the edge thereof, from which the resin is thrown.

Apparatus according to the invention has the advantage of simplicity, in that only one feed of resin to the channel in the rotatable annular member is necessary. The provision of the inwardly directed channel, from which the resin overflows to flow over the surface of the annular member to the edge thereof, ensures an even circumferential distribution of resin, and ease of control of the quantity of resin applied to the fibre.

An embodiment of the invention will now be described by way of example only with reference to the accompanying drawings in which:

Figure 1 is a diagrammatic cross section through part of an apparatus according to the invention; and

Figure 2 is a cross section on a larger scale of part of Figure 1 showing the feed for the resin.

Figure 3 is a plan view of the apparatus.

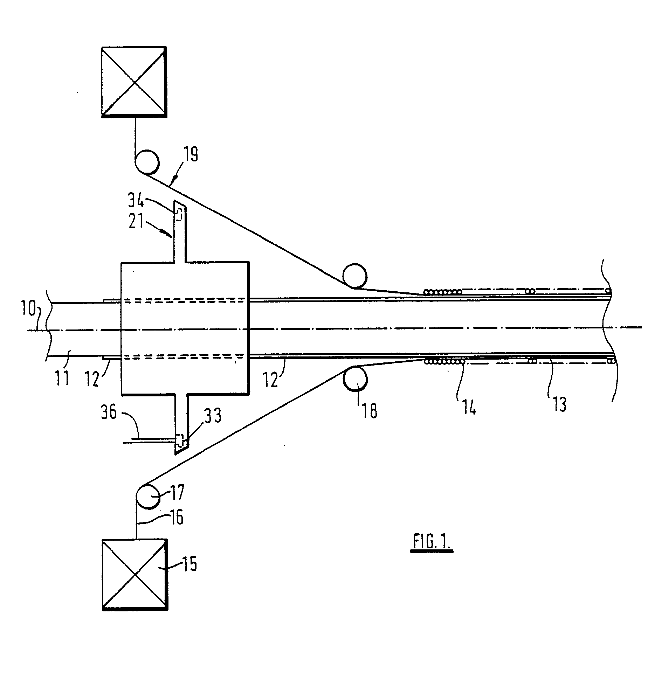

Figure 1 shows a mandrel 11 lying along the axis 10 of the apparatus and carrying a workpiece 12 which is constituted by the inner layers of a carbon fibre composite propeller shaft. The right hand end of the drawing also illustrates a further developed stage in the manufacture of the shaft in that an axial carbon fibre layer 13 has been applied to the workpiece and has been bound into position by a further layer 14 of circumferentially wound glass fibres. As the mandrel 11 with its workpiece 12 progresses through the apparatus, the additional layers 13 and 14 are applied to it by the apparatus.

The apparatus comprises a creel bank 15 from which carbon fibres can be drawn off in an inward radial direction as illustrated at 16. The fibres are stored on individual spools or the like, and drawn in from around the whole of the periphery of the creel bank. The fibres are passed round highly polished annular guide rings 17 and 18 which are arranged to guide the fibres into a convergent conical path as they are brought towards the workpiece 12. The spacing between adjacent fibres naturally reduces as the fibres come towards the axis of the apparatus and at a location 19 the fibres are sufficiently close together to enable them to retain a continuous layer of resin on and between the fibres when such a layer of resin is applied to the fibres.

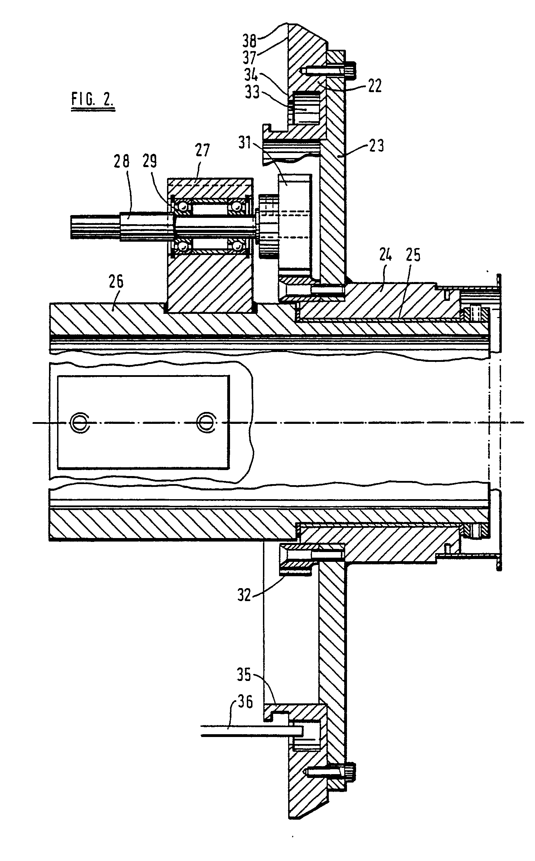

At this location 19, a resin supply means 21 is provided and further details of this are shown in Figure 2. The resin supply means comprises an annular rotor 22 which is mounted through a rotary plate 23 to a hub 24 which runs by means of a bearing 25 on a stationary sleeve 26 which constitutes a fixed part of the machine. Sleeve 26 carries a bearing bracket 27 in which a drive shaft 28 from an electric motor (not shown) is supported by bearings 29. Shaft 28 drives a pinion 31 which meshes with an externally toothed annular gear 32 which is arranged to rotate with the hub 24 and annular rotor 22. This electric motor thus causes the rotor 22 to rotate.

Rotor 22 incorporates an annular groove 33 near its inner edge and this groove opens axially to one side of the rotor. The groove has an inwardly extending lip 34 from its outer edge so that the outer part of the groove can be considered as a shallower groove which opens in an inward direction into the main part of the groove 33. Groove 33 is intended to carry a supply of resin and an extension guard 35 protects the gears 31 and 32 from spillage of resin.

Resin is supplied through a tube 36 into the interior of the groove 33. In use, when the rotor 22 and groove 33 are rotating, the resin supplied to the interior of the groove rotates with the groove and tends to be held in the outer part of the groove by means of the lip 34. When the resin supply exceeds the volume of the outer part of the groove, the resin flows over the lip 34 and is flung out by centrifugal force along the radial surface 37 until it is flung off the periphery of the rotor at a sharp edge 38. Details of the arrangement such as the viscosity of the resin, speed of rotation of the rotor and rate of supply of the resin are so selected that the resin is flung off the edge 38 in the form of a continuous thin curtain. The resin supply means of Figure 2 is so positioned in the apparatus that after travelling across a short gap, the resin comes into contact with the carbon fibres at point 19. The spacing between adjacent fibres is such that the resin adheres to the fibres and bridges the gap between adjacent fibres as well as applying a coating to the fibres.

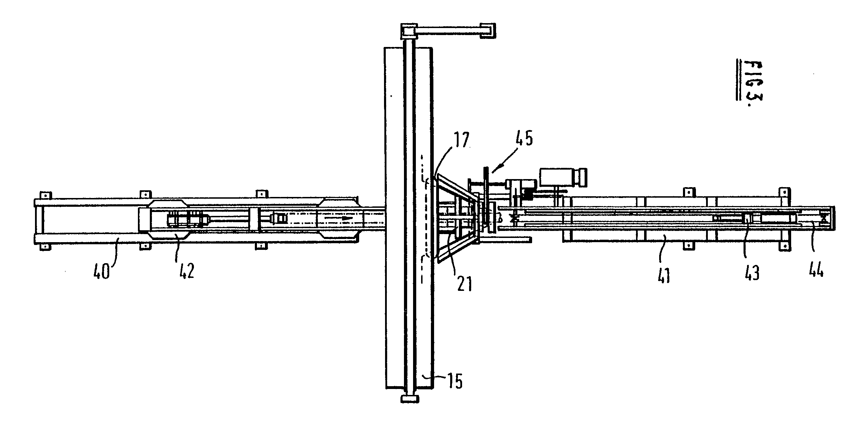

Figure 3 shows diagrammatically in plan view the whole of the apparatus. It comprises two frame structures 40, 41 which have rails to support trollies 42, 43 having chucks or the like to receive the two ends of mandrel 11. The trolley 43 is movable along its rails by cables 44, so that the mandrel can be advanced through the apparatus described above in relation to Figures 1 and 2. The means for applying the layer of circumferentially wound fibre, is indicated at 45, and comprises an annular structure rotatable about the mandrel and carrying a supply of glass fibre strand.

In use, the fibres 16 are drawn towards the workpiece 12 past the location 19 where they are supplied with resin. The fibres converge with each other and with the workpiece and this convergence assists in causing the resin to flow into and thoroughly impregnate the fibres. When the fibres are finally bound tightly on to the workpiece 12 by means of the circumferential glass fibres 14, they are thoroughly impregnated with resin and surrounded by some excess resin. The excess resin holds the glass fibres 14 in position.

## Claims

1. Apparatus for applying a layer of resin and axial fibres to a workpiece (12) during the manufacture of a composite shaft, including means (11, 40, 41, 42, 43) for supporting the workpiece (12) along an axis (10), a plurality of fibre feed stations (15) spaced around the periphery of the axis, guide means (17, 18) for guiding the fibres (19) from the stations such that they converge in a cone towards the workpiece (12), and resin supply means (21) arranged to apply resin to the fibres (19) of the cone after they have converged sufficiently to support resin on and between the fibres but before the fibres reach the workpiece (12), characterised in that the resin supply means comprises an annular member (22) co-axial with and rotatable about said axis, an inwardly directed annular channel (33) in the annular member (22) and a resin feed (36) to the interior of the channel (33) whereby the resin is distributed around and overflows from the channel (33) over a surface (37) of the annular member to the edge (38) thereof, from which the resin is thrown by centrifugal force into the path of the fibres (19).

2. Apparatus as claimed in claim 1 further characterised by means (45) for applying circumferentially oriented fibres to the workpiece (12) upon said axial fibres.

## Patentansprüche

1. Vorrichtung zum Auftragen einer Lage Harz und axial sich erstreckender Fasern auf ein Werkstück (12) während der Herstellung einer zusammengesetzten Welle, einschließlich Mitteln (11, 40, 41, 42, 43), um das Werkstück (12) entlang einer Achse (10) zu halten, einer Vielzahl von in einem Abstand voneinander um den Umfang der Achse angeordneter Faserzuführstationen (15), Führungsmitteln (17, 18), um die Fasern (19) von den in einem Kegel zusammenlaufenden Stationen in Richtung auf das Werkstück (12) zu führen und Harzzuführmitteln (21), die so angeordnet sind, daß sie Harz auf die Fasern (19) des Kegels auftragen, nachdem diese sich soweit einander angenähert haben, daß sie den Harz auf und zwischen den Fasern halten, aber bevor die Fasern das Werkstück (12) erreichen, dadurch gekennzeichnet, daß die Harzzuführmittel einen ringförmigen, mit der genannten Achse koaxial verlaufenden und um diese sich drehbaren Körper (22) und eine auf das Innere des Kanals (33) gerichtete Harzbeschickungsvorrichtung (36) aufweisen, wobei der Harz um den Kanal (33) herum verteilt wird und von diesem aus über eine Fläche (37) des ringförmigen Körpers auf die Kante (38) überläuft, von wo aus der Harz durch die Zentrifugalkraft in den Weg der Fasern (19) geschleudert wird.

2. Vorrichtung nach Anspruch 1, dadurch gekennzeichnet, daß sie Mittel (45) zum Auftragen von in Umfangsrichtung orientierten Fasern auf das Werkstück (12) über die genannten axial verlaufenden Fasern aufweist.

**Revendications**

1. Appareil pour appliquer une couche de résine et de fibres axiales à une pièce à travailler (12) pendant la fabrication d'un arbre composite, comprenant des moyens (11, 40, 41, 42, 43) pour soutenir la pièce à travailler (12) le long d'un axe (10), une multiplicité de postes d'alimentation (15) en fibres, répartis autour de la périphérie de l'axe, des moyens de guidage (17, 18) pour guider les fibres (19) à partir des postes, de façon qu'elles convergent en un cône vers la pièce à travailler (12), et des moyens d'alimentation en résine (21), arrangés pour appliquer de la résine aux fibres (19) du cône après qu'elles aient convergé suffisamment pour soutenir la résine sur et entre les fibres, mais avant que les fibres n'atteignent la pièce à travailler (12), caractérisé en ce que les moyens d'alimentation en résine comprennent un élément annulaire (22) coaxial à l'axe et pouvant tourner autour de cet axe, un canal annulaire (33) dirigé vers l'intérieur dans l'élément annulaire (22) et une résine (36) fournie à l'intérieur du canal (33), en sorte que la résine soit distribuée tout autour et déborde du canal (33) par-dessus une surface (37) de l'élément annulaire, vers le bord (38) de celui-ci, d'où la résine est projetée par la force centrifuge dans la trajectoire des fibres (19).

2. Appareil suivant la revendication 1, caractérisé encore par des moyens (45) pour appliquer des fibres orientées circonférentiellement, à la pièce à travailler (12), sur les fibres axiales.

0 042 248

FIG.1.

FIG. 2.

FIG 3.